(19) Europäisches Patentamt
European Patent Office
Office européen des brevets

(11) **EP 4 507 947 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **23738632.1**

(22) Anmeldetag: **21.06.2023**

(51) Internationale Patentklassifikation (IPC):
**B61K 9/12** *(2006.01)* **G01M 17/10** *(2006.01)*
**B61L 15/00** *(2006.01)*

(52) Gemeinsame Patentklassifikation (CPC):
**B61K 9/12; B61L 15/0081; G01M 17/10;**
B61L 2205/04

(86) Internationale Anmeldenummer:
**PCT/EP2023/066829**

(87) Internationale Veröffentlichungsnummer:
**WO 2024/002829 (04.01.2024 Gazette 2024/01)**

(54) **VERFAHREN UND VORRICHTUNG ZUR RADGEOMETRIEERMITTLUNG UND SCHIENENFAHRZEUG**

METHOD AND DEVICE FOR ASCERTAINING THE GEOMETRY OF A WHEEL, AND RAIL VEHICLE

PROCÉDÉ ET DISPOSITIF DE DÉTERMINATION DE LA GÉOMÉTRIE D'UNE ROUE ET VÉHICULE FERROVIAIRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.06.2022 AT 504712022**

(43) Veröffentlichungstag der Anmeldung:
**19.02.2025 Patentblatt 2025/08**

(73) Patentinhaber: **Siemens Mobility Austria GmbH 1210 Wien (AT)**

(72) Erfinder:
• **PUCHINGER-MENDLIK, Thomas**
  **8010 Graz (AT)**
• **MODER, Thomas**
  **8047 Graz (AT)**

• **SCHAFFLER, Gerald**
  **8053 Graz (AT)**
• **SCHWARZL, Christiane**
  **1060 Wien (AT)**
• **SIMON, Johannes**
  **8043 Graz (AT)**
• **GIRSTMAIR, Bernhard Lukas**
  **8010 Graz (AT)**
• **GRABNER, Gerald**
  **8010 Graz (AT)**

(74) Vertreter: **Siemens Patent Attorneys Postfach 22 16 34 80506 München (DE)**

(56) Entgegenhaltungen:
EP-A1- 1 197 417   WO-A1-2021/188957
WO-A1-95/30886   CN-A- 108 593 315

EP 4 507 947 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Radgeometrieermittlung für Fahrzeuge, insbesondere für Schienenfahrzeuge, wobei mittels zumindest eines ersten Sensors Vertikalbeschleunigungen zumindest eines ersten Rads ermittelt werden, wobei Fahrgeschwindigkeiten verarbeitet werden, und wobei auf Grundlage von Vertikalbeschleunigungssignalen, welche ein Schwingverhalten des zumindest ersten Rads charakterisieren, Amplitudenspektren gebildet werden.

Bei Fahrzeugen besteht häufig Bedarf nach einer genauen Kenntnis einer Radgeometrie. Beispielsweise ist zur Bestimmung von Rad- oder Radsatzdrehzahlen, für bestimmte Überwachungs- und Diagnosefunktionen betreffend Räder oder Radsätze oder zur Geschwindigkeitsermittlung über Odometrie etc. ein Radradius, ein Raddurchmesser oder ein Radumfang erforderlich.

Aus dem Stand der Technik ist beispielsweise die EP 1 197 415 A2 bekannt, in welcher ein Verfahren zur Detektion von Lagerschäden beschrieben ist. Bei diesem Verfahren wird aus Beschleunigungssignalen, welche im Bereich eines Achslagers erfasst werden, eine definierte Anzahl an Außenringüberrollharmonischen und daraus ein Kennwert ermittelt, welcher einen Lagerzustand indiziert.

Weiterhin ist in der EP 1 197 417 A1 ein Verfahren zur Räderschadenserkennung für Schienenfahrzeuge offenbart. Bei diesem Verfahren wird aus Beschleunigungssignalen, welche im Bereich eines Achslagers erfasst werden, eine definierte Anzahl an Radunrundheitsharmonischen und daraus ein Kennwert ermittelt, welcher einen Radzustand indiziert.

Darüber hinaus ist in der WO 2018/059937 A1 eine RadAnordnung für ein Schienenfahrzeug mit einem Drehzahlgeber gezeigt.

Ferner offenbart die WO 95/30886 A1 eine Vorrichtung zur Detektion von Defekten an Radsätzen von Schienenfahrzeugen und Gleisen für Schienenfahrzeuge. Die Vorrichtung umfasst einen Prozessor, in welchem zur Detektion eines Defekts an einem Radsatz oder an einem Gleis Messergebnisse bezüglich Drehraten einerseits und vertikale Beschleunigungen oder Vibrationen andererseits verarbeitet werden.

Der Erfindung liegt die Aufgabe zugrunde, ein schwingungsbasiertes Verfahren zur Radgeometrieermittlung anzugeben.

Erfindungsgemäß wird diese Aufgabe gelöst mit einem Verfahren nach Anspruch 1, bei dem aus den Amplitudenspektren ein Amplituden-Summenspektrum gebildet wird, wobei aus zumindest einer Frequenz des Amplituden-Summenspektrums, welche einem Amplituden-Maximum des Amplituden-Summenspektrums zugeordnet ist, zumindest eine Radharmonische bestimmt wird, und wobei eine Radgeometrie aus einer Normfahrgeschwindigkeit, welche ein charakteristisches Fahrzeug-Betriebsverhalten definiert, sowie aus der zumindest einen Radharmonischen ermittelt wird. Durch diese Maßnahme wird ein präzises und zugleich im Hinblick auf einen Materialaufwand einfaches Verfahren zur Radgeometrieermittlung erzielt, welches beispielsweise auch in Fahrzeuge implementiert werden kann, die keine Drehzahlsensoren aufweisen. Bei derartigen Implementierungen kann auf eine aufwendige Nachrüstung von Drehzahlsensoren und zughöriger Verkabelung verzichtet werden. Es ist aber auch möglich, dass das erfindungsgemäße Verfahren in Redundanz zu einer Radgeometrieermittlung auf Grundlage von Messungen eines Drehzahlsensors eingesetzt und so eine Absicherung von Ermittlungsergebnissen erreicht wird.

Zudem weisen viele Fahrzeuge im Bereich ihrer Räder Beschleunigungssensoren auf, welche Vertikalbeschleunigungen messen. Beispielsweise sind zur Radsatzlagerdiagnose bei Fahrwerken von Schienenfahrzeugen häufig Beschleunigungssensoren zur Erfassung von Vertikalbeschleunigungen auf Radsatzlagergehäusen der Fahrwerke angeordnet. Eine derartige Ausrüstung kann von dem erfindungsgemäßen Verfahren mitgenutzt werden.

Bei dem erfindungsgemäßen Verfahren kann die Radharmonische beispielsweise als Frequenz des Amplituden-Summenspektrums, welche einem Amplituden-Maximum des Amplituden-Summenspektrums zugeordnet ist, identifiziert werden. Die Radharmonische kann aber beispielsweise auch aus einer Mehrzahl an Frequenzen, welche Amplituden-Maxima von verschiedenen Suchintervallen innerhalb des Amplituden-Summenspektrums zugeordnet sind, ausgewählt werden. Die Normfahrgeschwindigkeit kann beispielsweise eine mittlere Geschwindigkeit über einen definierten Zeitraum oder aber auch eine definierte Konstante etc. sein. Die Fahrgeschwindigkeiten können z.B. gemessen, aber auch ermittelt etc. werden (beispielsweise durch zeitliche Ableitung von Positionsdaten aus einer Ortungsvorrichtung).

Weitere vorteilhafte Ausgestaltungen des erfindungsgemäßen Verfahrens ergeben sich aus den Unteransprüchen.

Günstig ist es beispielsweise, wenn als Radgeometrie ein Radradius mittels einer Radiusbildungsvorschrift $r = \frac{v_n}{2\pi \cdot f_h}$ oder ein Raddurchmesser mittels einer Durchmesserbildungsvorschrift $R = \frac{v_n}{\pi \cdot f_h}$ ermittelt wird. Eine Kenntnis des Radradius oder des Raddurchmessers ist für verschiedene Anwendungszwecke vorteilhaft. Beispielsweise kann der ermittelte Radradius oder der Raddurchmesser in einem odometrischen Verfahren zur Fahrgeschwindigkeitsbestimmung mittels Drehzahlsensoren oder in einem Raddrehzahlermittlungsvorgang eingesetzt werden.

In Äquivalenz zu dem Radradius oder dem Raddurchmesser kann beispielsweise auch ein Radumfang ermittelt werden.

Eine Vorzugslösung wird erreicht, wenn die zumindest eine Radharmonische unter Ausschluss von Störfrequenzen, welche von anderen Vorgängen als einer Rotation des zumindest ersten Rads verursacht werden, ermittelt wird.

Dadurch wird die Radgeometrie mit erhöhter Genauigkeit ermittelt, da die Störfrequenzen ausgefiltert werden. Durch diese Maßnahme wird eine Bildung eines Qualitätsmaßes ermöglicht, welches beispielsweise mit einer Anzahl von in der Radgeometrieermittlung eingesetzten, d.h. nicht ausgefilterten Frequenzen steigt. Je größer z.B. das Qualitätsmaß ist, umso größer ist die Genauigkeit oder Plausibilität eines ermittelten Radgeometriewerts.

Eine Parametrierung und somit eine Effizienzsteigerung der Radgeometrieermittlung werden ermöglicht, wenn die zumindest eine Radharmonische aus aus einem Suchgebiet, welches aus der Normfahrgeschwindigkeit, einem definierten maximal zulässigen Radradius, einem definierten minimal zulässigen Radradius sowie einem Ordnungsfaktor mit k = 1 ... K aus ersten Intervallen $\left[\frac{k \cdot v_n}{2\pi \cdot r_{max}}, \frac{k \cdot v_n}{2\pi \cdot r_{min}}\right]$ oder aus der Normfahrgeschwindigkeit, einem definierten maximal zulässigen Raddurchmesser, einem definierten minimal zulässigen Raddurchmesser sowie einem Ordnungsfaktor mit k = 1 ... K aus zweiten Intervallen $\left[\frac{k \cdot v_n}{\pi \cdot R_{max}}, \frac{k \cdot v_n}{\pi \cdot R_{min}}\right]$ gebildet ist, ausgewählten Frequenzen ermittelt wird.

Gegenüber statistischen Ausreißern robuste Ergebnisse der Radgeometrieermittlung werden erreicht, wenn die zumindest eine Radharmonische als Median aus den aus dem Suchgebiet ausgewählten Frequenzen, welche Amplituden-Maxima des Amplituden-Summenspektrums innerhalb der ersten Intervalle oder der zweiten Intervalle zugeordnet sind, ermittelt wird.

Eine Drehzahlermittlung ohne Einsatz von Drehzahlsensoren wird ermöglicht, wenn eine Raddrehzahl aus einem Wert der Fahrgeschwindigkeiten und dem Radradius mittels einer ersten Drehzahlbildungsvorschrift $n = \frac{v}{2\pi \cdot r}$ oder aus einem Wert der Fahrgeschwindigkeiten und dem Raddurchmesser mittels einer zweiten Drehzahlbildungsvorschrift $n = \frac{v}{\pi \cdot R}$ ermittelt wird.

Zur Drehzahlermittlung kann es aber auch hilfreich sein, wenn zumindest eine Kern-Radharmonische aus Frequenzen innerhalb eines Kernsuchgebiets, welches um erste Suchwerte $\frac{k \cdot v}{2\pi \cdot r}$, welche aus einem Wert der Fahrgeschwindigkeiten, dem Radradius sowie einem Ordnungsfaktor mit k = 1 ... K gebildet sind oder um zweite Suchwerte $\frac{k \cdot v}{\pi \cdot R}$, welche aus einem Wert der Fahrgeschwindigkeiten, dem Raddurchmesser sowie einem Ordnungsfaktor mit k = 1 ... K gebildet sind, zentriert ist, ermittelt wird, wobei eine Raddrehzahl aus der zumindest einen Kern-Radharmonischen sowie aus zumindest einem Wert für den Ordnungsfaktor, für welchen eine aus dem Kernsuchgebiet als die zumindest eine Kern-Radharmonische ausgewählte Frequenz einem Amplituden-Maximum des Amplituden-Summenspektrums zugeordnet ist, mittels einer dritten Drehzahlbildungsvorschrift $n = \frac{f_{h1}}{k}$ oder als statistischer Wert aus Quotienten, welche durch Divisionen einer Mehrzahl von Werten für die Kern-Radharmonische durch den Werten für die Kern-Radharmonischen jeweils zugeordnete Werte für den Ordnungsfaktor gebildet werden, ermittelt wird.

Durch diese Maßnahme werden auch bei unverlässlichen oder ungenauen Informationen in Bezug auf die Fahrgeschwindigkeiten ausreichend genaue bzw. plausible Ergebnisse für die Raddrehzahl erreicht. Der Wert der Fahrgeschwindigkeiten wird lediglich für eine Ermittlung der Kern-Radharmonischen eingesetzt, wobei die Kern-Radharmonische oder eine Mehrzahl von Kern-Radharmonischen in dem Kernsuchgebiet, welches beispielsweise kleiner ist als das Suchgebiet für die Radharmonische oder eine Mehrzahl von Radharmonischen, gesucht wird. Die Raddrehzahl wird aus der Kern-Radharmonischen oder der Mehrzahl von Kern-Radharmonischen bestimmt, wofür der Wert der Fahrgeschwindigkeiten nicht unmittelbar benötigt wird.

Eine hohe Genauigkeit von Ermittlungsergebnissen im Hinblick auf die Raddrehzahl wird sichergestellt, wenn die Raddrehzahl dann ermittelt wird, wenn die zumindest eine Radharmonische oder die zumindest eine Kern-Radharmonische aus einer Anzahl an Frequenzen ermittelt ist, welche gleich einem oder größer als ein Frequenzanzahl-Schwellwert ist.

Dadurch wird beispielsweise vermieden, dass die Radharmonische oder die Kern-Radharmonische aus einem Frequenzspektrum ermittelt wird, welches z.B. eine hohe Anzahl an auszufilternden Störfrequenzen aufweist.

Risiken im Hinblick auf unverlässliche Radgeometrieermittlungsergebnisse werden reduziert, wenn die Amplitudenspektren und/oder das Amplituden-Summenspektrum dann gebildet und/oder aktualisiert werden, wenn die Fahrgeschwindigkeiten gleich einem oder größer als ein Fahrgeschwindigkeitsschwellwert sind und wenn Fahrbeschleunigungen gleich einem oder kleiner als ein Fahrbeschleunigungsgrenzwert sind.

Bei den Fahrbeschleunigungen kann es sich um mathematisch positive, aber auch um mathematisch negative Beschleunigungen (d.h. Verzögerungen) handeln. Dies kann über ein Vorzeichen des Fahrbeschleunigungsgrenzwerts oder über eine Absolutbetragsbildung bei den Fahrbeschleunigungen berücksichtigt werden. Äquivalent zu den Fahrbeschleunigungen und dem Fahrbeschleunigungsgrenzwert können auch Antriebs- oder Bremskräfte mit einem Antriebs- oder Bremskraftgrenzwert verglichen werden.

Eine effiziente Auslastung einer verfügbaren Rechnerkapazität wird ermöglicht, wenn die Amplitudenspektren in einem ersten Zeitintervall gebildet werden und das Summen-Amplitudenspektrum in einem zweiten Zeitintervall aktualisiert wird, wobei das zweite Zeitintervall größer als das erste Zeitintervall ist.

In diesem Zusammenhang ist es auch hilfreich, wenn aus den Amplitudenspektren Teilsummen-Amplitudenspektren gebildet werden, welche in einem dritten Zeitintervall, welches größer als das erste Zeitintervall und kleiner als das zweite Zeitintervall ist, zwischengespeichert werden, wobei das Summen-Amplitudenspektrum aus den Teilsummen-Amplitudenspektren gebildet wird.

Eine erfolgversprechende Anwendung des erfindungsgemäßen Verfahrens wird in einer Vorrichtung umfassend zumindest einen ersten Sensor, zumindest eine Recheneinrichtung sowie zumindest eine Einrichtung zur Ortung, zur Fahrgeschwindigkeitsermittlung oder zur Fahrgeschwindigkeitserfassung ermöglicht, wenn die zumindest eine Recheneinrichtung zur Geometrieermittlung zumindest eines ersten Rads mit dem zumindest ersten Sensor zur Erfassung von Vertikalbeschleunigungen sowie mit der zumindest einen Einrichtung zur Ortung, zur Fahrgeschwindigkeitsermittlung oder zur Fahrgeschwindigkeitserfassung signalübertragend verbunden ist.

Insbesondere ist es günstig, wenn ein Schienenfahrzeug mit zumindest einer erfindungsgemäßen Vorrichtung ausgerüstet ist.

Bei Schienenfahrzeugen besteht häufig Bedarf an einer einfachen, aber präzisen Radgeometrieermittlung (beispielsweise im Zusammenhang mit Diagnose- und/oder Überwachungseinrichtungen, mit welchen z.B. Radschäden detektiert werden können etc.).

Nachfolgend wird die Erfindung anhand von Ausführungsbeispielen näher erläutert.

Es zeigen beispielhaft:

Fig. 1: Ein Flussdiagramm zu einer beispielhaften Ausführungsvariante eines erfindungsgemäßen Verfahrens, mit welchem Radgeometrieparameter und Raddrehzahlen ermittelt werden, und

Fig. 2: Einen Seitenriss eines Ausschnitts aus einer beispielhaften Ausführungsvariante eines erfindungsgemäßen Schienenfahrzeugs mit einer beispielhaften Ausführungsvariante einer erfindungsgemäßen Vorrichtung zur Durchführung eines erfindungsgemäßen Verfahrens zur Radgeometrieermittlung.

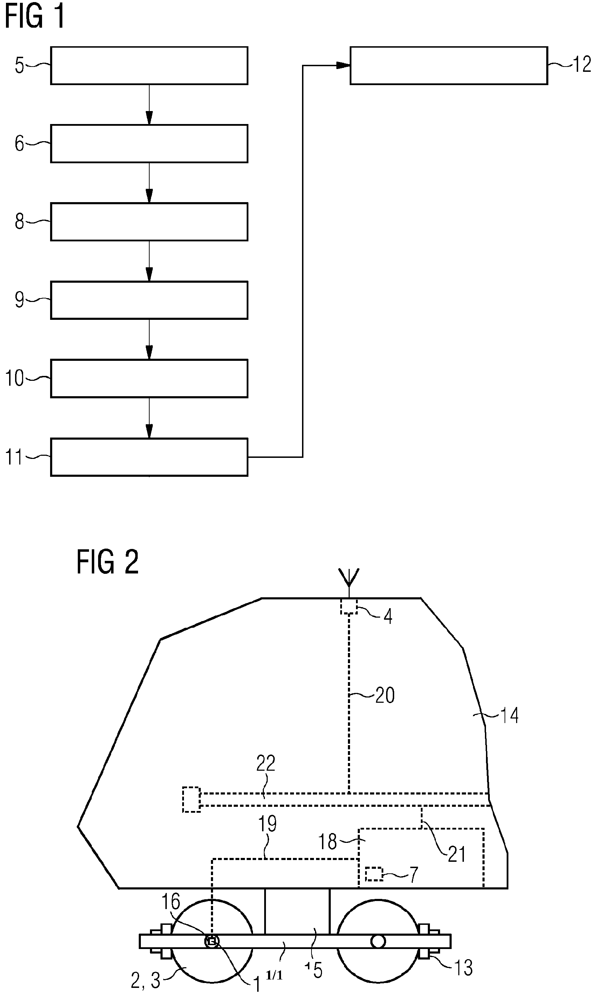

Fig. 1 zeigt ein Flussdiagramm zu einer beispielhaften Ausführungsvariante eines erfindungsgemäßen Verfahrens, mit welchem Radgeometrieparameter und Raddrehzahlen ermittelt werden.

Das Verfahren gemäß Fig. 1 ist für ein Schienenfahrzeug vorgesehen, wie es beispielhaft in Fig. 2 dargestellt ist. Mittels eines ersten Sensors 1, wie er beispielhaft in Fig. 2 gezeigt ist, werden Vertikalbeschleunigungen eines ersten Rads 2 eines Radsatzes 3, wie er beispielhaft in Fig. 2 dargestellt ist, ermittelt. Aus einer ebenfalls in Fig. 2 beispielhaft gezeigten satellitenbasierten Ortungseinrichtung 4 des Schienenfahrzeugs werden Positionsinformationen des Schienenfahrzeugs empfangen, welche durch zeitliche Ableitung in im Zusammenhang mit dem erfindungsgemäßen Verfahren zu verarbeitende Fahrgeschwindigkeiten v transformiert werden.

Auf Grundlage von Vertikalbeschleunigungssignalen des ersten Sensors 1, welche ein Schwingverhalten des ersten Rads 2 charakterisieren, werden in einem ersten Zeitintervall von 1 s Amplitudenspektren gebildet, welche auf eine Normfahrgeschwindigkeit $v_n$, welche als Mittelwert, d.h. als statistischer Wert aus den innerhalb eines Tages erfassten Fahrgeschwindigkeiten v gebildet wird, normiert werden. (Amplitudenspektrumsbildung 5). Erfindungsgemäß ist es auch möglich, dass für die Normfahrgeschwindigkeit $v_n$ ein anderer Wert (z.B. eine Konstante, welche eine typische oder besonders häufig auftretende Betriebsgeschwindigkeit charakterisiert) eingesetzt wird. Die Normfahrgeschwindigkeit $v_n$ beschreibt jedenfalls ein charakteristisches Betriebsverhalten eines Fahrzeugs.

Die Amplitudenspektren werden kumuliert, wodurch Teilsummen-Amplitudenspektren gebildet (Kumulation 6) und in einer in Fig. 2 gezeigten Datenbank 7 des Schienenfahrzeugs zwischengespeichert (Zwischenspeicherung 8) werden. Die Teilsummen-Amplitudenspektren werden wiederum in einem zweiten Zeitintervall von 1 d zu einem Summen-Amplitudenspektrum zusammengefasst (Aggregation 9). Die Zwischenspeicherung erfolgt in einem dritten Zeitintervall von 1 h. Das zweite Zeitintervall ist somit größer als das erste Zeitintervall, das dritte Zeitintervall größer als das erste Zeitintervall und kleiner als das zweite Zeitintervall.

Die Amplitudenspektrumsbildung 5, die Kumulation 6, die Zwischenspeicherung 8, die Aggregation 9 sowie alle weiteren Schritte des erfindungsgemäßen Verfahrens werden unter der Bedingung durchgeführt, dass die Fahrgeschwindigkeiten v gleich einem oder größer als ein definierter Fahrgeschwindigkeitsschwellwert sind und wenn Fahrbeschleunigungen gleich einem oder kleiner als ein definierter Fahrbeschleunigungsgrenzwert sind.

Bei den Fahrbeschleunigungen kann es sich um mathematisch positive, aber auch um mathematisch negative Beschleunigungen (d.h. Verzögerungen) handeln. Dies wird über ein Vorzeichen des Fahrbeschleunigungsgrenzwerts oder über eine Absolutbetragsbildung bei den Fahrbeschleunigungen berücksichtigt. Als Fahrgeschwindigkeitsschwellwert ist in der beispielhaften Ausführungsvariante des erfindungsgemäßen Verfahrens nach Fig. 1 ein Wert von 5 km/h angesetzt, als Fahrbeschleunigungsgrenzwert ein Wert von 0,01 m/s². Erfindungsgemäß ist es jedoch auch möglich, andere Werte zu wählen.

Aus Frequenzen des Amplituden-Summenspektrums, welche Amplituden-Maxima des Amplituden-Summenspektrums zugeordnet sind, wird eine Radharmonische $f_h$ bestimmt (Harmonischenermittlung 10).

Bei Harmonischen handelt es sich um Spektrallinien, deren Frequenzen zueinander ein ganzzahliges Verhältnis aufweisen. Dies tritt insbesondere bei Fouriertransformationen von periodischen, nicht sinusförmigen Signalen auf. Eine Grundharmonische ist dabei beispielsweise jene Harmonische mit der niedrigsten Frequenz, welche einem Kehrwert einer Periodendauer eines solchen Signals entspricht.

Bei der Harmonischenermittlung 10 wird die Radharmonische $f_h$ aus ausgewählten Frequenzen ermittelt. Die Frequenzen werden aus einem Suchgebiet ausgewählt, welches aus der Normfahrgeschwindigkeit $v_n$, einem definierten maximal zulässigen Radradius $r_{max}$, einem definierten minimal zulässigen Radradius $r_{min}$ sowie einem Ordnungsfaktor k mit k = 1 ... K (Ordnungsmaximum K mit K = 12, wobei erfindungsgemäß auch andere Werte für das Ordnungsmaximum K eingesetzt werden können) aus ersten Intervallen $\left[\frac{k \cdot v_n}{2\pi \cdot r_{max}}, \frac{k \cdot v_n}{2\pi \cdot r_{min}}\right]$ gebildet ist. Bei dem maximal zulässigen Radradius $r_{max}$ und dem minimal zulässigen Radradius $r_{min}$ handelt es sich um Betriebsgrenzmaße.

Erfindungsgemäß ist es auch denkbar, dass das Suchgebiet aus zweiten Intervallen $\left[\frac{k \cdot v_n}{\pi \cdot R_{max}}, \frac{k \cdot v_n}{\pi \cdot R_{min}}\right]$ gebildet ist, in welche statt des maximal zulässigen Radradius $r_{max}$ und des minimal zulässigen Radradius $r_{min}$ ein definierter maximal zulässiger Raddurchmesser $R_{max}$ und ein definierter minimal zulässiger Raddurchmesser $R_{min}$ eingesetzt sind.

Die ausgewählten Frequenzen sind Amplituden-Maxima des Amplituden-Summenspektrums innerhalb der ersten Intervalle (oder der zweiten Intervalle, wenn das Suchgebiet aus diesen gebildet ist) zugeordnet. D.h. es werden jene Frequenzen aus Frequenz-Amplituden-Verläufen ausgewählt, bei welchen die Frequenz-Amplituden-Verläufe Amplituden-Maxima aufweisen.

Die ausgewählten Frequenzen werden auf den dem jeweiligen ersten Intervall oder zweiten Intervall, aus welchem eine Frequenz ausgewählt wird, zugeordneten Ordnungsfaktor k normiert. Beispielsweise wird eine Frequenz aus dem ersten Intervall mit einem Ordnungsfaktor von k = 2 zur Normierung durch k = 2 dividiert.

Dann werden aus den ausgewählten und normierten Frequenzen Störfrequenzen außerhalb eines definierten Frequenzbands, welche von anderen Vorgängen als einer Rotation des ersten Rads 2 (z.B. von wiederkehrenden, dynamischen Störungen aus einem Kontakt zwischen dem ersten Rad 2 und einer Schiene) verursacht werden, ausgefiltert, wodurch die Radharmonische $f_h$ unter Ausschluss dieser Störfrequenzen, ermittelt wird. Je größer eine Anzahl ausgewählter und nicht ausgefilterter Frequenzen ist, umso größer wird ein Wert eines Qualitätsmaßes für die Radgeometrieermittlung festgelegt. Je größer das Qualitätsmaß ist, umso genauer und verlässlicher ist die Radgeometrieermittlung.

Sodann wird die Radharmonische $f_h$ als Median aus den aus dem Suchgebiet ausgewählten, normierten und gefilterten Frequenzen bestimmt. Damit ist die Harmonischenermittlung 10 abgeschlossen.

Anschließend wird eine Radgeometrie aus der Normfahrgeschwindigkeit $v_n$ sowie aus der Radharmonischen $f_h$ ermittelt (Geometrieermittlung 11). Die Harmonischenermittlung 10 und die Geometrieermittlung 11 werden einmal täglich durchgeführt.

Als Radgeometrie wird ein Radradius r mittels einer Radiusbildungsvorschrift $r = \frac{v_n}{2\pi \cdot f_h}$ ermittelt. Erfindungsgemäß ist es jedoch auch vorstellbar, dass als Radgeometrie beispielsweise ein Raddurchmesser R mittels einer Durchmesserbildungsvorschrift $R = \frac{v_n}{\pi \cdot f_h}$ ermittelt wird. Erfindungsgemäß ist es weiterhin denkbar, dass mittels eines zweiten Sensors Vertikalbeschleunigungen eines zweiten Rads des Radsatzes 3 ermittelt werden und damit auch eine Radgeometrieermittlung nach oben beschriebenem Schema für das zweite Rad durchgeführt wird. Der Radradius r oder der Raddurchmesser R kann dabei beispielsweise als mittlerer Radius oder als mittlerer Durchmesser bezüglich des ersten Rads 2 und des zweiten Rads bestimmt werden.

Auf Basis des ermittelten Radradius r oder des ermittelten Raddurchmessers R wird dann eine Raddrehzahl n ermittelt (Drehzahlermittlung 12), sofern die Radharmonische $f_h$ aus einer Anzahl an Frequenzen ermittelt ist, welche gleich einem oder größer als ein Frequenzanzahl-Schwellwert ist. Damit die Raddrehzahl n ermittelt wird, muss also das oben genannte Qualitätsmaß gleich dem oder größer als der Frequenzanzahl-Schwellwert sein. Der Frequenzanzahl-Schwellwert ist für die beispielhafte Ausführungsvariante eines erfindungsgemäßen Verfahrens nach Fig. 1 mit 10 definiert. Erfindungsgemäß ist es jedoch auch möglich, andere Werte als Frequenzanzahl-Schwellwert anzusetzen.

Bei der Drehzahlermittlung 12 wird die Raddrehzahl n aus einem aktuellen Wert der Fahrgeschwindigkeiten v und dem Radradius r mittels einer ersten Drehzahlbildungsvorschrift $n = \frac{v}{2\pi \cdot r}$ ermittelt. Erfindungsgemäß ist es jedoch auch möglich, die Raddrehzahl n aus einem Wert der Fahrgeschwindigkeiten v und dem Raddurchmesser R mittels einer zweiten Drehzahlbildungsvorschrift $n = \frac{v}{\pi \cdot R}$ zu ermitteln.

Weiterhin ist es insbesondere bei unverlässlichen Informationen über die Fahrgeschwindigkeiten v denkbar, dass als alternative Drehzahlermittlung 12 eine

Kern-Radharmonische $f_{h1}$ aus Frequenzen innerhalb eines Kernsuchgebiets, welches um erste Suchwerte $\frac{k \cdot v}{2\pi \cdot r}$, welche aus einem Wert der Fahrgeschwindigkeiten v, dem Radradius r sowie einem Ordnungsfaktor k mit k = 1 ... K gebildet sind oder um zweite Suchwerte $\frac{k \cdot v}{\pi \cdot R}$, welche aus einem Wert der Fahrgeschwindigkeiten v, dem Raddurchmesser R sowie einem Ordnungsfaktor k mit k = 1 ... K gebildet sind, zentriert ist, ermittelt wird, wobei die Raddrehzahl n aus der Kern-Radharmonischen $f_{h1}$ sowie aus jenem Wert für den Ordnungsfaktor k, für welchen eine aus dem Kernsuchgebiet als die Kern-Radharmonischen $f_{h1}$ ausgewählte Frequenz einem Amplituden-Maximum des Amplituden-Summenspektrums zugeordnet ist, mittels einer dritten Drehzahlbildungsvorschrift $n = \frac{f_{h1}}{k}$ ermittelt wird. Eine Zentrierung um die ersten Suchwerte oder die zweiten Suchwerte erfolgt durch Intervallbildung. Beispielsweise werden dritte Intervalle um die ersten Suchwerte gebildet, indem in den ersten Suchwerten für eine untere Grenze der dritten Intervalle der Radradius r durch einen unteren Grenzwert ersetzt wird, welcher zwischen den Werten für den Radradius r und den maximal zulässigen Radradius $r_{max}$ liegt und für eine obere Grenze der dritten Intervalle der Radradius r durch einen oberen Grenzwert ersetzt wird, welcher zwischen den Werten für den Radradius r und den minimal zulässigen Radradius $r_{min}$ liegt. Das Kernsuchgebiet ist also enger als das oben erwähnte Suchgebiet für die Radharmonische $f_h$.

Für die zweiten Suchwerte kann bei der Intervallbildung auf Basis des Raddurchmessers R, des maximal zulässigen Raddurchmessers $R_{max}$ und des minimal zulässigen Raddurchmessers $R_{min}$ nach gleichem Schema vorgegangen werden, wobei vierte Intervalle um die zweiten Suchwerte gebildet werden, indem in den zweiten Suchwerten für eine untere Grenze der vierten Intervalle der Raddurchmesser R durch einen unteren Grenzwert ersetzt wird, welcher zwischen den Werten für den Raddurchmesser R und den maximal zulässigen Raddurchmesser $R_{max}$ liegt und für eine obere Grenze der vierten Intervalle der Raddurchmesser R durch einen oberen Grenzwert ersetzt wird, welcher zwischen den Werten für den Raddurchmesser R und den minimal zulässigen Raddurchmesser $R_{min}$ liegt.

Wird eine Mehrzahl von Werten für die Kern-Radharmonische $f_{h1}$ aus dem Kernsuchgebiet ausgewählt (es wird z.B. für jeden Wert des Ordnungsfaktors k bei einem Ordnungsmaximum K von K > 1 ein Wert für die Kern-Radharmonische $f_{h1}$ ausgewählt), so wird die Raddrehzahl n als statistischer Wert (z.B. als Median) aus Quotienten, welche durch Divisionen der Mehrzahl von Werten für die Kern-Radharmonische $f_{h1}$ durch den Werten für die Kern-Radharmonischen $f_{h1}$ jeweils zugeordnete Werte für den Ordnungsfaktor k gebildet werden, ermittelt.

Auch bei der alternativen Drehzahlermittlung 12 mittels der Kern-Radharmonischen $f_{h1}$ kann ein Frequenzanzahl-Schwellwert vorausgesetzt werden.

Ist der Radradius r oder der Raddurchmesser R ermittelt und kann dieser für die Drehzahlermittlung 12 eingesetzt werden, so können die die Amplitudenspektrumsbildung 5, die Kumulation 6 und die Zwischenspeicherung 8 zeitlich parallel mit der Drehzahlermittlung 12 durchgeführt werden (beispielsweise, indem die Amplitudenspektrumsbildung 5, die Kumulation 6 und die Zwischenspeicherung 8 mittels eines ersten Prozessors oder eines ersten Prozessorkerns und die Drehzahlermittlung 12 mittels eines zweiten Prozessors oder eines zweiten Prozessorkerns vorgenommen wird). Die Drehzahlermittlung 12 wird sekündlich durchgeführt.

In Fig. 2 ist ein Seitenriss eines Ausschnitts aus einer beispielhaften Ausführungsvariante eines erfindungsgemäßen Schienenfahrzeugs mit einer beispielhaften Ausführungsvariante einer erfindungsgemäßen Vorrichtung zur Durchführung eines erfindungsgemäßen Verfahrens zur Radgeometrieermittlung, wie es beispielhaft im Zusammenhang mit Fig. 1 gezeigt ist, dargestellt.

Das Schienenfahrzeug weist ein Fahrwerk 13 und einen Wagenkasten 14 auf, wobei der Wagenkasten 14 über eine Luft-Sekundärfederanordnung 15 auf dem Fahrwerk 13 abgestützt ist. Mit einem Deckel eines ersten Radsatzlagergehäuses 16 eines ersten Radsatzlagers ist ein erster Sensor 1 verbunden. Der erste Sensor 1 ist als Piezo-Beschleunigungssensor ausgebildet.

Ein in Fig. 2 nicht sichtbarer, als Piezo-Beschleunigungssensor ausgeführter zweiter Sensor ist mit einem in Fig. 2 ebenfalls nicht sichtbaren zweiten Radsatzlagergehäuse eines zweiten Radsatzlagers des Fahrwerks 13 verbunden. Über das erste Radsatzlager sowie das erste Radsatzlagergehäuse 16 und das zweite Radsatzlager sowie das zweite Radsatzlagergehäuse ist ein erster Radsatz 3 umfassend ein erstes Rad 2 und ein in Fig. 2 nicht sichtbares zweites Rad federnd mit einem Fahrwerksrahmen 17 gekoppelt.

Mittels des ersten Sensors 1 werden Vertikalbeschleunigungen des ersten Rads 2 erfasst, mittels des zweiten Sensors Vertikalbeschleunigungen des zweiten Rads.

In dem Wagenkasten 14 ist eine Recheneinrichtung 18 mit einer implementierten Datenbank 7 angeordnet, mittels welcher Signale des ersten Sensors 1 und des zweiten Sensors verarbeitet werden.

Mit einem Dach des Wagenkastens 14 ist eine satellitenbasierten Ortungseinrichtung 4 mit einer Antenne verbunden. Die Ortungseinrichtung 4 ist als Global Positioning System (GPS) ausgeführt. Mittels der Ortungseinrichtung 4 werden Fahrgeschwindigkeiten v des Schienenfahrzeugs ermittelt. Zur Ermittlung der Fahrgeschwindigkeiten v ist es erfindungsgemäß jedoch auch denkbar, eine Einrichtung zur Erfassung oder Messung der Fahrgeschwindigkeiten v in oder an dem Wagenkasten 14 anzuordnen (beispielsweise eine Einrichtung zur Doppler-Radargeschwindigkeitsmessung etc.).

Auf Basis der Signale bezüglich der Vertikalbeschleunigungen und der Fahrgeschwindigkeiten v werden jene im Zusammenhang mit Fig. 1 beschriebenen Schritte der beispielhaften Ausführungsvariante eines erfindungsgemäßen Verfahrens, d.h. eine Amplitudenspektrumsbildung 5, eine Kumulation 6, eine Zwischenspeicherung 8, eine Aggregation 9, eine Harmonischenermittlung 10, eine Geometrieermittlung 11 sowie eine Drehzahlermittlung 12 in der Recheneinrichtung 18 durchgeführt.

Der erste Sensor 1, der zweite Sensor, die Recheneinrichtung 18 sowie die Ortungseinrichtung 4 sind Teile der beispielhaften Ausführungsvariante einer erfindungsgemäßen Vorrichtung zur Durchführung des erfindungsgemäßen Verfahrens zur Radgeometrieermittlung, wie es beispielhaft im Zusammenhang mit Fig. 1 beschrieben ist.

Die Recheneinrichtung 18 ist zur Ermittlung eines Radradius r und einer Raddrehzahl n, welche auch im Zusammenhang mit Fig. 1 genannt sind, mit dem ersten Sensor 1 und dem zweiten Sensor sowie mit der Ortungseinrichtung 4 signalübertragend verbunden.

Zwischen dem ersten Sensor 1 und der Recheneinrichtung 18 ist eine erste Signalleitung 19 vorgesehen, zwischen der Ortungseinrichtung 4 und einem Fahrzeugbus 22, welcher in dem Wagenkasten 14 verläuft, eine zweite Signalleitung 20. Der Fahrzeugbus 22 ist zur Datenübertragung von der Ortungseinrichtung 4 in die Recheneinrichtung 18 über eine dritte Signalleitung 21 mit der Recheneinrichtung 18 verbunden. Der zweite Sensor ist über eine in Fig. 2 nicht gezeigte vierte Signalleitung mit der Recheneinrichtung 18 verbunden.

Erfindungsgemäß ist es auch vorstellbar, zwischen der Recheneinrichtung 18 einerseits und dem ersten Sensor 1, dem zweiten Sensor und der Ortungseinrichtung 4 andererseits Funkverbindungen vorzusehen.

Liste der Bezeichnungen

1 Erster Sensor
2 Erstes Rad
3 Radsatz
4 Ortungseinrichtung
5 Amplitudenspektrumsbildung
6 Kumulation
7 Datenbank
8 Zwischenspeicherung
9 Aggregation
10 Harmonischenermittlung
11 Geometrieermittlung
12 Drehzahlermittlung
13 Fahrwerk
14 Wagenkasten
15 Luft-Sekundärfederanordnung
16 Erstes Radsatzlagergehäuse

17 Fahrwerksrahmen
18 Recheneinrichtung
19 Erste Signalleitung
20 Zweite Signalleitung
21 Dritte Signalleitung
22 Fahrzeugbus

v Fahrgeschwindigkeiten
$v_n$ Normfahrgeschwindigkeit
$f_h$ Radharmonische
$r_{max}$ Maximal zulässiger Radradius
$r_{min}$ Minimal zulässiger Radradius
k Ordnungsfaktor
K Ordnungsmaximum
$R_{max}$ Maximal zulässiger Raddurchmesser
$R_{min}$ Minimal zulässiger Raddurchmesser
r Radradius
R Raddurchmesser
n Raddrehzahl
$f_{h1}$ Kern-Radharmonische

**Patentansprüche**

1. Verfahren zur Radgeometrieermittlung für Fahrzeuge, insbesondere für Schienenfahrzeuge, wobei mittels zumindest eines ersten Sensors (1) Vertikalbeschleunigungen zumindest eines ersten Rads (2) ermittelt werden, wobei Fahrgeschwindigkeiten (v) verarbeitet werden, und wobei auf Grundlage von Vertikalbeschleunigungssignalen, welche ein Schwingverhalten des zumindest ersten Rads (2) charakterisieren, Amplitudenspektren gebildet werden, **dadurch gekennzeichnet, dass** aus den Amplitudenspektren ein Amplituden-Summenspektrum gebildet wird, wobei aus zumindest einer Frequenz des Amplituden-Summenspektrums, welche einem Amplituden-Maximum des Amplituden-Summenspektrums zugeordnet ist, zumindest eine Radharmonische ($f_h$) bestimmt wird, und wobei eine Radgeometrie aus einer Normfahrgeschwindigkeit ($v_n$), welche ein charakteristisches Fahrzeug-Betriebsverhalten definiert, sowie aus der zumindest einen Radharmonischen ($f_h$) ermittelt wird.

2. Verfahren nach Anspruch 1, **dadurch gekennzeichnet, dass** als Radgeometrie ein Radradius (r) mittels einer Radiusbildungsvorschrift $r = \frac{v_n}{2\pi \cdot f_h}$ oder ein Raddurchmesser (R) mittels einer Durchmesserbildungsvorschrift $R = \frac{v_n}{\pi \cdot f_h}$ ermittelt wird.

3. Verfahren nach Anspruch 1 oder 2, **dadurch gekennzeichnet, dass** die Amplitudenspektren auf die Normfahrgeschwindigkeit ($v_n$) normiert werden.

4. Verfahren nach einem der Ansprüche 1 bis 3, **da-**

**durch gekennzeichnet, dass** die zumindest eine Radharmonische ($f_h$) unter Ausschluss von Störfrequenzen, welche von anderen Vorgängen als einer Rotation des zumindest ersten Rads (2) verursacht werden, ermittelt wird.

5. Verfahren nach einem der Ansprüche 1 bis 4, **dadurch gekennzeichnet, dass** die zumindest eine Radharmonische ($f_h$) aus aus einem Suchgebiet, welches aus der Normfahrgeschwindigkeit ($v_n$), einem definierten maximal zulässigen Radradius ($r_{max}$), einem definierten minimal zulässigen Radradius ($r_{min}$) sowie einem Ordnungsfaktor (k) mit k = 1 ... K aus ersten Intervallen $\left[\frac{k \cdot v_n}{2\pi \cdot r_{max}}, \frac{k \cdot v_n}{2\pi \cdot r_{min}}\right]$ oder aus der Normfahrgeschwindigkeit ($v_n$), einem definierten maximal zulässigen Raddurchmesser ($R_{max}$), einem definierten minimal zulässigen Raddurchmesser ($R_{min}$) sowie einem Ordnungsfaktor (k) mit k = 1 ... K aus zweiten Intervallen $\left[\frac{k \cdot v_n}{\pi \cdot R_{max}}, \frac{k \cdot v_n}{\pi \cdot R_{min}}\right]$ gebildet ist, ausgewählten Frequenzen ermittelt wird.

6. Verfahren nach Anspruch 5, **dadurch gekennzeichnet, dass** die ausgewählten Frequenzen auf den Ordnungsfaktor (k) normiert werden.

7. Verfahren nach Anspruch 5 oder 6, **dadurch gekennzeichnet, dass** die zumindest eine Radharmonische ($f_h$) als Median aus den aus dem Suchgebiet ausgewählten Frequenzen, welche Amplituden-Maxima des Amplituden-Summenspektrums innerhalb der ersten Intervalle oder der zweiten Intervalle zugeordnet sind, ermittelt wird.

8. Verfahren nach einem der Ansprüche 2 bis 7, **dadurch gekennzeichnet, dass** eine Raddrehzahl (n) aus einem Wert der Fahrgeschwindigkeiten (v) und dem Radradius (r) mittels einer ersten Drehzahlbildungsvorschrift $n = \frac{v}{2\pi \cdot r}$ oder aus einem Wert der Fahrgeschwindigkeiten (v) und dem Raddurchmesser (R) mittels einer zweiten Drehzahlbildungsvorschrift $n = \frac{v}{\pi \cdot R}$ ermittelt wird.

9. Verfahren nach einem der Ansprüche 2 bis 7, **dadurch gekennzeichnet, dass** zumindest eine Kern-Radharmonische ($f_{h1}$) aus Frequenzen innerhalb eines Kernsuchgebiets, welches um erste Suchwerte $\frac{k \cdot v}{2\pi \cdot r}$, welche aus einem Wert der Fahrgeschwindigkeiten (v), dem Radradius (r) sowie einem Ordnungsfaktor (k) mit k = 1 ... K gebildet sind oder um zweite Suchwerte $\frac{k \cdot v}{\pi \cdot R}$, welche aus einem Wert der Fahrgeschwindigkeiten (v), dem Raddurchmesser (R) sowie einem Ordnungsfaktor (k) mit k = 1 ... K gebildet sind, zentriert ist, ermittelt wird, wobei eine Raddrehzahl (n) aus der zumindest einen Kern-Radharmonischen ($f_{h1}$) sowie aus zumindest einem Wert für den Ordnungsfaktor (k), für welchen eine aus dem Kernsuchgebiet als die zumindest eine Kern-Radharmonische ($f_{h1}$) ausgewählte Frequenz einem Amplituden-Maximum des Amplituden-Summenspektrums zugeordnet ist, mittels einer dritten Drehzahlbildungsvorschrift $n = \frac{f_{h1}}{k}$ oder als statistischer Wert aus Quotienten, welche durch Divisionen einer Mehrzahl von Werten für die Kern-Radharmonische ($f_{h1}$) durch den Werten für die Kern-Radharmonischen ($f_{h1}$) jeweils zugeordnete Werte für den Ordnungsfaktor (k) gebildet werden, ermittelt wird.

10. Verfahren nach Anspruch 8 oder 9, **dadurch gekennzeichnet, dass** die Raddrehzahl (n) dann ermittelt wird, wenn die zumindest eine Radharmonische ($f_h$) oder die zumindest eine Kern-Radharmonische ($f_{h1}$) aus einer Anzahl an Frequenzen ermittelt ist, welche gleich einem oder größer als ein Frequenzanzahl-Schwellwert ist.

11. Verfahren nach einem der Ansprüche 1 bis 10, **dadurch gekennzeichnet, dass** die Amplitudenspektren und/oder das Amplituden-Summenspektrum dann gebildet und/oder aktualisiert werden, wenn die Fahrgeschwindigkeiten (v) gleich einem oder größer als ein Fahrgeschwindigkeitsschwellwert sind und wenn Fahrbeschleunigungen gleich einem oder kleiner als ein Fahrbeschleunigungsgrenzwert sind.

12. Verfahren nach einem der Ansprüche 1 bis 11, **dadurch gekennzeichnet, dass** die Amplitudenspektren in einem ersten Zeitintervall gebildet werden und das Summen-Amplitudenspektrum in einem zweiten Zeitintervall aktualisiert wird, wobei das zweite Zeitintervall größer als das erste Zeitintervall ist.

13. Verfahren nach Anspruch 12, **dadurch gekennzeichnet, dass** aus den Amplitudenspektren Teilsummen-Amplitudenspektren gebildet werden, welche in einem dritten Zeitintervall, welches größer als das erste Zeitintervall und kleiner als das zweite Zeitintervall ist, zwischengespeichert werden, wobei das Summen-Amplitudenspektrum aus den Teilsummen-Amplitudenspektren gebildet wird.

14. Vorrichtung zur Durchführung eines Verfahrens nach einem der Ansprüche 1 bis 13, die Vorrichtung umfassend zumindest einen ersten Sensor (1), zumindest eine Recheneinrichtung (18) sowie zumindest eine Einrichtung zur Ortung, zur Fahrgeschwindigkeitsermittlung oder zur Fahrgeschwindigkeitserfassung, **dadurch gekennzeichnet, dass** die zumindest eine Recheneinrichtung (18) zur Geometrieermittlung (11) zumindest eines ersten Rads (2) mit dem zumindest ersten Sensor (1) zur Erfassung von Vertikalbeschleunigungen sowie mit der zumindest einen Einrichtung zur Ortung, zur Fahrgeschwindigkeitsermittlung oder zur Fahrgeschwindigkeitserfassung signalübertragend verbunden ist.

15. Schienenfahrzeug mit zumindest einer Vorrichtung nach Anspruch 14.

**Claims**

1. Method for wheel geometry determination for vehicles, in particular for rail vehicles, wherein vertical accelerations of at least one first wheel (2) are determined by means of at least one first sensor (1), wherein travel speeds (v) are processed, and wherein amplitude spectra are formed on the basis of vertical acceleration signals which characterise an oscillating behaviour of the at least one first wheel (2), **characterised in that** an amplitude sum spectrum is formed from the amplitude spectra, wherein at least one wheel harmonic ($f_h$) is determined from at least one frequency of the amplitude sum spectrum which is assigned to an amplitude maximum of the amplitude sum spectrum, and wherein a wheel geometry is determined from a standard travel speed ($v_n$) which defines a characteristic vehicle operating behaviour, and from the at least one wheel harmonic ($f_h$).

2. Method according to claim 1, **characterised in that** a wheel radius (r) is determined as the wheel geometry by means of a radius formation rule $r = \frac{v_n}{2\pi \cdot f_h}$ or a wheel diameter (R) is determined by means of a diameter formation rule $R = \frac{v_n}{\pi \cdot f_h}$.

3. Method according to claim 1 or 2, **characterised in that** the amplitude spectra are standardised to the standard travel speed ($v_n$).

4. Method according to one of claims 1 to 3, **characterised in that** the at least one wheel harmonic ($f_h$) is determined excluding interference frequencies which are caused by processes other than a rotation of the at least one first wheel (2).

5. Method according to one of claims 1 to 4, **characterised in that** the at least one wheel harmonic ($f_h$) determines selected frequencies from a search area consisting of the standard travel speed ($v_n$), a defined maximum permissible wheel radius ($r_{max}$), a defined minimum permissible wheel radius ($r_{min}$) and

an order factor (k) with k = 1 ... K from first intervals $\left[ \frac{k \cdot v_n}{2\pi \cdot r_{max}}, \frac{k \cdot v_n}{2\pi \cdot r_{min}} \right]$ or of the standard travel speed ($v_n$), a defined maximum permissible wheel diameter ($R_{max}$), a defined minimum permissible wheel diameter ($R_{min}$) and an order factor (k) with k = 1 ... K from second intervals $\left[ \frac{k \cdot v_n}{\pi \cdot R_{max}}, \frac{k \cdot v_n}{\pi \cdot R_{min}} \right]$.

6. Method according to claim 5, **characterised in that** the selected frequencies are standardised to the order factor (k).

7. Method according to claim 5 or 6, **characterised in that** the at least one wheel harmonic ($f_h$) is determined as the median of the frequencies selected from the search area, which are assigned to amplitude maxima of the amplitude sum spectrum within the first intervals or the second intervals.

8. Method according to one of the claims 2 to 7, **characterised in that** a wheel speed (n) is determined from a value of the travel speeds (v) and the wheel radius (r) by means of a first speed formation rule $n = \frac{v}{2\pi \cdot r}$ or from a value of the travel speeds (v) and the wheel diameter (R) by means of a second speed formation rule $n = \frac{v}{\pi \cdot R}$.

9. Method according to one of claims 2 to 7, **characterised in that** at least one core wheel harmonic ($f_{h1}$) is determined from frequencies within a core search area which is centred around first search values $\frac{k \cdot v}{2\pi \cdot r}$, which are formed from a value of the travel speeds (v), the wheel radius (r) and an order factor (k) with k = 1 ... K or around second search values $\frac{k \cdot v}{\pi \cdot R}$, which are formed from a value of the travel speeds (v), the wheel diameter (R) and an order factor (k) with k = 1 ... K, wherein a wheel speed (n) is determined from the at least one core wheel harmonic ($f_{h1}$) and from at least one value for the order factor (k), for which a frequency selected from the core search area as the at least one core wheel harmonic ($f_{h1}$) is assigned to an amplitude maximum of the amplitude sum spectrum, by means of a third speed formation rule $n = \frac{f_{h1}}{k}$ or as a statistical value from quotients which are formed by dividing a plurality of values for the core wheel harmonic ($f_{h1}$) by the values for the order factor (k) respectively assigned to the values for the core wheel harmonic ($f_{h1}$).

**10.** Method according to claim 8 or 9, **characterised in that** the wheel speed (n) is determined when the at least one wheel harmonic ($f_h$) or the at least one core wheel harmonic ($f_{h1}$) is determined from a number of frequencies which is equal to or greater than a frequency number threshold value.

**11.** Method according to one of claims 1 to 10, **characterised in that** the amplitude spectra and/or the amplitude sum spectrum are formed and/or updated when the travel speeds (v) are equal to or greater than a travel speed threshold and when travel accelerations are equal to or less than a travel acceleration threshold.

**12.** Method according to one of claims 1 to 11, **characterised in that** the amplitude spectra are formed in a first time interval and the sum amplitude spectrum is updated in a second time interval, wherein the second time interval is greater than the first time interval.

**13.** Method according to claim 12, **characterised in that** the partial sum the amplitude spectra are formed from the amplitude spectra, which are temporarily stored in a third time interval which is greater than the first time interval and less than the second time interval, wherein the sum amplitude spectrum is formed from the partial sum amplitude spectra.

**14.** Apparatus for carrying out a method according to one of claims 1 to 13, the apparatus comprising at least one first sensor (1), at least one computing facility (18) and at least one facility for positioning, for determining the travel speed or for detecting the travel speed, **characterised in that** the at least one computing facility (18) for geometry determination (11) of at least one first wheel (2) is connected in a signal-transmitting manner to the at least first sensor (1) for detecting vertical accelerations and to the at least one facility for positioning, for determining the travel speed or for detecting the travel speed.

**15.** Rail vehicle with at least one apparatus according to claim 14.

**Revendications**

**1.** Procédé pour la détermination de la géométrie d'une roue pour des véhicules, en particulier pour des véhicules ferroviaires, dans lequel des accélérations verticales d'au moins une première roue (2) sont déterminées au moyen d'au moins un premier capteur (1), dans lequel des vitesses de déplacement (v) sont traitées, et dans lequel des spectres d'amplitude sont formés sur la base de signaux d'accélération verticale, lesquels caractérisent un comportement vibratoire de l'au moins une première roue (2), **caractérisé en ce qu'**un spectre de sommes d'amplitudes est formé à partir des spectres d'amplitude, dans lequel au moins une harmonique de roue ($f_h$) est établie à partir d'au moins une fréquence du spectre de sommes d'amplitudes, laquelle est associée à un maximum d'amplitude du spectre de sommes d'amplitudes, et dans lequel une géométrie de roue est déterminée à partir d'une vitesse de déplacement normale ($v_n$), laquelle définit un comportement de véhicule en service caractéristique, ainsi qu'à partir de l'au moins une harmonique de roue ($f_h$).

**2.** Procédé selon la revendication 1, **caractérisé en ce que**, en tant que géométrie de roue, un rayon de roue (r) est déterminé au moyen d'une règle de formation du rayon $r = \dfrac{v_n}{2\pi \cdot f_h}$ ou un diamètre de roue (R) est déterminé au moyen d'une règle de formation du diamètre $R = \dfrac{v_n}{\pi \cdot f_h}$ .

**3.** Procédé selon la revendication 1 ou la revendication 2, **caractérisé en ce que** les spectres d'amplitude sont normalisés à la vitesse de déplacement normale ($v_n$).

**4.** Procédé selon l'une des revendications 1 à 3, **caractérisé en ce que** l'au moins une harmonique de roue ($f_h$) est déterminée à l'exclusion de fréquences perturbatrices, lesquelles sont provoquées par d'autres processus qu'une rotation de l'au moins une première roue (2).

**5.** Procédé selon l'une des revendications 1 à 4, **caractérisé en ce que** l'au moins une harmonique de roue ($f_h$) est déterminée à partir de fréquences sélectionnées parmi une zone de recherche, laquelle est formée à partir de la vitesse de déplacement normale ($v_n$), d'un rayon de roue maximal admissible défini ($r_{max}$), d'un rayon de roue minimal admissible défini ($r_{min}$) ainsi que d'un facteur d'ordre (k) avec k = 1 ... K parmi des premiers intervalles $\left[\dfrac{k \cdot v_n}{2\pi \cdot r_{max}}, \dfrac{k \cdot v_n}{2\pi \cdot r_{min}}\right]$ ou à partir de la vitesse de déplacement normale ($v_n$), d'un diamètre de roue maximal admissible défini ($R_{max}$), d'un diamètre de roue minimal admissible défini ($R_{min}$) ainsi que d'un facteur d'ordre (k) avec k = 1 ... K parmi des deuxièmes intervalles $\left[\dfrac{k \cdot v_n}{\pi \cdot R_{max}}, \dfrac{k \cdot v_n}{\pi \cdot R_{min}}\right]$ .

**6.** Procédé selon la revendication 5, **caractérisé en ce que** les fréquences sélectionnées sont normalisées au facteur d'ordre (k).

**7.** Procédé selon la revendication 5 ou la revendication 6, **caractérisé en ce que** l'au moins une harmonique de roue ($f_h$) est déterminée en tant que médiane des fréquences sélectionnées parmi la zone de recherche, lesquelles sont associées à des maximums d'amplitude du spectre de sommes d'amplitudes à l'intérieur des premiers intervalles ou des deuxièmes intervalles.

**8.** Procédé selon l'une des revendications 2 à 7, **caractérisé en ce qu'**une vitesse de rotation de roue ($n$) est déterminée à partir d'une valeur des vitesses de déplacement ($v$) et du rayon de roue ($r$) au moyen d'une première règle de formation de la vitesse de rotation $n = \dfrac{v}{2\pi \cdot r}$ ou à partir d'une valeur des vitesses de déplacement ($v$) et du diamètre de roue ($R$) au moyen d'une deuxième règle de formation de la vitesse de rotation $n = \dfrac{v}{\pi \cdot R}$.

**9.** Procédé selon l'une des revendications 2 à 7, **caractérisé en ce qu'**au moins une harmonique de roue de noyau ($f_{h1}$) est déterminée à partir de fréquences à l'intérieur d'une zone de recherche de noyau, laquelle est centrée autour de premières valeurs de recherche $\dfrac{k \cdot v}{2\pi \cdot r}$, lesquelles sont formées à partir d'une valeur des vitesses de déplacement ($v$), du rayon de roue ($r$) ainsi que d'un facteur d'ordre ($k$) avec $k = 1 \ldots K$ ou autour de deuxièmes valeurs de recherche $\dfrac{k \cdot v}{\pi \cdot R}$, lesquelles sont formées à partir d'une valeur des vitesses de déplacement ($v$), du diamètre de roue ($R$) ainsi que d'un facteur d'ordre ($k$) avec $k = 1 \ldots K$, dans lequel une vitesse de rotation de roue ($n$) est déterminée à partir de l'au moins une harmonique de roue de noyau ($f_{h1}$) ainsi qu'à partir d'au moins une valeur pour le facteur d'ordre ($k$) pour laquelle une fréquence sélectionnée en tant que l'au moins une harmonique de roue de noyau ($f_{h1}$) parmi la zone de recherche de noyau est associée à un maximum d'amplitude du spectre de sommes d'amplitudes, au moyen d'une troisième règle de formation de la vitesse de rotation $n = \dfrac{f_{h1}}{k}$ ou en tant que valeur statistique à partir de quotients, lesquels sont formés par des divisions d'une pluralité de valeurs pour l'harmonique de roue de noyau ($f_{h1}$) par les valeurs pour le facteur d'ordre ($k$) respectivement associées aux valeurs pour l'harmonique de roue de noyau ($f_{h1}$).

**10.** Procédé selon la revendication 8 ou la revendication 9, **caractérisé en ce que** la vitesse de rotation de roue ($n$) est ensuite déterminée lorsque l'au moins une harmonique de roue ($f_h$) ou l'au moins une harmonique de roue de noyau ($f_{h1}$) est déterminée à partir d'un nombre de fréquences, lequel est identique à une valeur seuil de nombre de fréquences ou supérieur à celle-ci.

**11.** Procédé selon l'une des revendications 1 à 10, **caractérisé en ce que** les spectres d'amplitude et/ou le spectre de sommes d'amplitudes sont ensuite formés et/ou actualisés lorsque les vitesses de déplacement ($v$) sont identiques à une valeur seuil de vitesse de déplacement ou supérieures à celle-ci et lorsque des accélérations de déplacement sont identiques à une valeur limite d'accélération de déplacement ou inférieures à celle-ci.

**12.** Procédé selon l'une des revendications 1 à 11, **caractérisé en ce que** les spectres d'amplitude sont formés dans un premier intervalle de temps et le spectre d'amplitude en sommes est actualisé dans un deuxième intervalle de temps, dans lequel le deuxième intervalle de temps est supérieur au premier intervalle de temps.

**13.** Procédé selon la revendication 12, **caractérisé en ce que** des spectres d'amplitude en sommes partielles sont formés à partir des spectres d'amplitude, lesquels spectres d'amplitude en sommes partielles sont mis en cache dans un troisième intervalle de temps, lequel est supérieur au premier intervalle de temps et inférieur au deuxième intervalle de temps, dans lequel le spectre d'amplitude en sommes est formé à partir des spectres d'amplitude en sommes partielles.

**14.** Dispositif pour la mise en œuvre d'un procédé selon l'une des revendications 1 à 13, le dispositif comportant au moins un premier capteur (1), au moins un calculateur (18) ainsi qu'au moins un dispositif pour la localisation, pour la détermination de la vitesse de déplacement ou pour la détection de la vitesse de déplacement, **caractérisé en ce que** l'au moins un calculateur (18) pour la détermination de la géométrie (11) d'au moins une première roue (2) est relié par transmission de signaux à l'au moins un premier capteur (1) pour la détection d'accélérations verticales ainsi qu'à l'au moins un dispositif pour la localisation, pour la détermination de la vitesse de déplacement ou pour la détection de la vitesse de déplacement.

**15.** Véhicule ferroviaire avec au moins un dispositif selon la revendication 14.

FIG 1

5

6

8

9

10

11

12

FIG 2

4

20

14

22

19

18

21

16

2, 3

1

15

13

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1197415 A2
- EP 1197417 A1
- WO 2018059937 A1
- WO 9530886 A1